(19) Europäisches Patentamt
European Patent Office
Office européen des brevets

(11) **EP 3 719 528 A1**

(12) **EUROPEAN PATENT APPLICATION**

(43) Date of publication:
**07.10.2020 Bulletin 2020/41**

(21) Application number: **19166617.1**

(22) Date of filing: **01.04.2019**

(51) Int Cl.:
*G01S 7/03* (2006.01)　　　　*G01S 13/42* (2006.01)
*G01S 7/41* (2006.01)　　　　*G01S 13/88* (2006.01)
*G01S 13/89* (2006.01)　　　　*H01Q 1/12* (2006.01)
*H01Q 21/00* (2006.01)　　　　*F03D 17/00* (2016.01)

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(71) Applicant: **Siemens Gamesa Renewable Energy A/S**
**7330 Brande (DK)**

(72) Inventors:
• **Nagel, Eirik**
**24939 Flensburg (DE)**
• **Nieuwenhuizen, John**
**8700 Horsens (DK)**

(74) Representative: **Aspacher, Karl-Georg**
**Siemens Gamesa Renewable Energy GmbH & Co. KG**
**Otto-Hahn-Ring 6**
**81739 München (DE)**

(54) **DETECTING PROPERTIES OF A MOVING OBJECT AT A WIND TURBINE SITE USING A BEAM FORMING ARRANGEMENT OF LEAKY FEEDERS**

(57)　　An apparatus for detecting one or more properties of a target object at a wind turbine site is provided. The apparatus comprises (a) a leaky feeder arrangement (20) comprising a plurality of parallel leaky feeders, (b) a transmitter (30) coupled to the leaky feeder arrangement (20) and configured to supply individual first radar signals to a group of leaky feeders (21, 22, 23) in the leaky feeder arrangement (20), the individual first radar signals being configured to form a first radar signal beam (W) in a predetermined direction (P) relative to the leaky feeder arrangement (20), (c) a receiver (40) coupled to the leaky feeder arrangement (20) and configured to receive a second radar signal from the leaky feeder arrangement (20), wherein the second radar signal is reflected from the target object when the first radar signal beam (W) hits the target object, and (d) a processing unit configured to analyse a first signal corresponding to the first radar signals and a second signal corresponding to the second radar signal in order to determine the one or more properties of the moving object. A wind turbine and a method are also provided.

FIG 2

## Description

Field of Invention

The present invention relates to wind turbines. More specifically, the present invention relates to an apparatus for detecting properties of a target object at a wind turbine site. The present invention further relates to a wind turbine comprising such apparatus and to a method of detecting properties of a target object at a wind turbine site.

Art Background

In the above defined technical field, systems are known, which comprise a plurality of radar units operatively configured to emit and receive radar signals. The radar units are typically mounted on and around the wind turbine tower, the radar units being positioned so as to measure reflections of an emitted radar signal from the turbine blade. A processing unit is configured to receive measurement data from the radar unit and to determine, by analysis of Doppler shift, time of flight, phase and amplitude in received radar signals relative to transmitted signals due to movement of the blade towards or away from the turbine tower, the velocity of the blade in the direction towards or away from the turbine tower. This permits calculation of the trajectory and, in particular, the absolute speed and position of the blade.

Using radar units to measure blade position based on the Doppler Effect is for example described in EP 2864632 and permits to avoid the installation of other types of sensors on the blades or nacelle of the wind turbine. This reduces manufacturing and maintenance costs of the wind turbine, since sensors positioned on the tower are easier to replace in the field.

However, such a solution is not yet optimal considering that for rotating objects, like the rotor blades or the nacelles, installation of a plurality of radar units is required.

A single radar unit may in fact be used but only for detecting the passage of the blade at a single location. At least two radar units (horizontally mounted) are required for following the position of the blade around the nacelle yawing. One radar unit is able to detect the revolution of the blade at a specific position. More than two single radar units may be used for improving redundancy, resolution and confidence of the detection. However, this further increases costs and the need for software resources. Each radar unit requires a dedicated processing unit for analyzing the signals and deriving the position and speed of the blade.

Attempts using leaky feeders arranged e.g. around the wind turbine tower have been made but suffer from at least the drawback that the radiation pattern from a leaky feeder is neither very well defined nor controllable. Thus, a reasonable signal to noise ratio requires the use of very strong signals and thus significant amounts of power and energy. Furthermore, it is not possible to vary radiation pattern in order to e.g. optimize and/or vary the direction of the emitted signal.

There may thus be a need for an improved way of efficiently detecting properties of a target object, such as a rotating rotor blade of a wind turbine, in a flexible manner.

Summary of the Invention

This need may be met by the subject-matter according to the independent claims. Advantageous embodiments of the present invention are set forth in the dependent claims.

According to a first aspect of the present invention, an apparatus for detecting one or more properties of a target object at a wind turbine site is provided. The apparatus comprises (a) a leaky feeder arrangement comprising a plurality of parallel leaky feeders, (b) a transmitter coupled to the leaky feeder arrangement and configured to supply individual first radar signals to a group of leaky feeders in the leaky feeder arrangement, the individual first radar signals being configured to form a first radar signal beam in a predetermined direction relative to the leaky feeder arrangement, (c) a receiver coupled to the leaky feeder arrangement and configured to receive a second radar signal from the leaky feeder arrangement, wherein the second radar signal is reflected from the target object when the first radar signal beam hits the target object, and (d) a processing unit configured to analyse a first signal corresponding to the first radar signals and a second signal corresponding to the second radar signal in order to determine the one or more properties of the moving object.

This aspect of the invention is based on the idea that parallel leaky feeders in a leaky feeder arrangement are supplied with individual signals (first radar signals) in such a way that the corresponding emitted (leaked) radar signals combine to form a radar signal beam in a predetermined direction. In other words, the group of leaky feeders is capable of beam forming. Thereby, energy consumption can be kept low as the irradiated energy is concentrated in the desired direction, and the direction can be chosen and varied in dependency on the circumstances and tasks to be carried out.

According to an embodiment of the invention, the transmitter is configured to generate the individual first radar signals by applying individual phase shifts to the first signal or by applying an amplitude modulation to the first signal.

By supplying individually phase shifted versions of the first signal to each leaky feeder in the group, the signals propagating along the parallel leaky feeders in the group will have different phases and thus be delayed relative to each other, such that a beam is formed in the predetermined direction.

A similar beam forming effect can be achieved by applying amplitude modulation to the first signal.

According to a further embodiment of the invention, the leaky feeders in the group of leaky feeders are arranged with a predetermined distance between neighbouring leaky feeders.

In other words, the radial distance between any pair of neighbouring leaky feeders in the group is the same.

According to a further embodiment of the invention, each leaky feeder in the leaky feeder arrangement comprises a plurality of leaky sections at corresponding positions in the longitudinal direction of the leaky feeders.

In other words, each leaky feeder comprises a plurality of leaky sections (for leaking or emitting the respective individual first radar signals and/or for receiving the reflected second radar signal) and these leaky sections are located at corresponding positions in the sense that a line perpendicular to the longitudinal direction of the parallel leaky feeders will pass through a leaky section of each leaky feeder.

According to a further embodiment of the invention, the leaky feeder arrangement comprises at least one leaky feeder which is not part of the group of leaky feeders and configured to receive the second radar signal.

In this embodiment, the second radar signal (i. e. the radar signal reflected from the target object) is received by a leaky feeder in the leaky feeder arrangement, which is not part of the group that emits the phase shifted first radar signals forming the first radar signal beam.

According to a further embodiment of the invention, the leaky feeder arrangement comprises a further group of leaky feeders which are not part of the group of leaky feeders and configured to receive the second radar signal.

In this embodiment, the second radar signal (i. e. the radar signal reflected from the target object) is received by a further group of leaky feeders which are not part of the group of leaky feeders that transmit the first radar signals.

According to a further embodiment of the invention, the receiver is configured to apply individual phase shifts to the second radar signal received by the leaky feeders in the further group of leaky feeders, thereby forming a second radar signal beam in a further predetermined direction relative to the leaky feeder arrangement.

In other words, the receiver uses the leaky feeders in the further group to perform beam forming with regard to the received (second) radar signal. This is advantageous in that it allows the apparatus to configure independent transmitting and receiving beams and thereby to adapt to changing blade properties, such as bending under variable loading conditions and resulting changes in the reflection angle at the blade. By determining the change in receiving beam direction needed to obtain maximum signal strength of the received signal, a current bending state of the rotor blade can e.g. be determined.

According to a further embodiment of the invention, at least one leaky feeder in the group of leaky feeders is configured to receive the second radar signal.

In this embodiment, the second radar signal (i. e. the radar signal reflected from the target object) is received by a leaky feeder in the leaky feeder arrangement, which is also part of the group that emits the phase shifted first radar signals forming the first radar signal beam.

According to a further embodiment of the invention, each leaky feeder in the leaky feeder arrangement is a leaky coaxial cable or a leaky waveguide.

A coaxial leaky cable may in particular be suitable in implementations where the first and second radar signals are RF signals. A leaky waveguide or a leaky stripline may in particular be suitable for embodiments where the first and second radar signals have higher frequencies.

According to a further embodiment of the invention, the leaky feeder arrangement is configured to form an arc or loop, e.g. around a wind turbine tower.

Thereby, by arranging the at least one leaky feeder in a suitable height (e.g. corresponding to the height in which a particular rotor blade section, such as a tip or mid section passes), reflections from the rotor blade will be received for any yaw angle (which may be set in dependency of the wind direction).

According to a further embodiment of the invention, the target object is a moving object of a wind turbine or a moving object external to a wind turbine.

A moving object of a wind turbine may in particular be a rotor blade or the nacelle. External objects may e.g. be birds or waves (in case of off shore installations).

According to a further embodiment of the invention, the moving object is a wind turbine rotor blade, and the one or more properties comprise one or more of a rotor blade position, a rotor blade speed, a rotor blade distance from tower, a rotor blade size, a rotor blade soiling state, and structural changes inside the rotor blade.

In other words, the properties span from parameters relating to spatial position and movement of the blade to analysis of the rotor blade surface geometry and properties (which changes in case of soiling).

As can be seen, the apparatus may also be used to detect other objects, such as birds, bats, ice, intruders, and sea waves, i.e. for the detection of height, direction and speed of waves in offshore applications.

According to a further embodiment of the invention, the transmitter is configured to vary the predetermined direction during operation in order to scan a predetermined region.

Thereby, a surface section of a rotor blade may e.g. be analysed.

According to a second aspect of the invention, a wind turbine is provided. The wind turbine comprises an apparatus according to the first aspect or any of above embodiments, wherein leaky feeder arrangement is arranged at a tower or a nacelle of the wind turbine.

This aspect is essentially based on the same idea as the first aspect discussed above.

The leaky feeder arrangement may be geometrically configured as an arc around the tower. In particular, the leaky feeder arrangement may be geometrically configured as a loop (or part/segment of a loop) surrounding the tower of the wind turbine. Thereby, by arranging the at least one leaky feeder in a suitable height (e.g. corresponding to the height in which a particular rotor blade section, such as a tip or mid section passes), reflections from the rotor blade will be received for any yaw angle (which may be set in dependency of the wind direction).

According to a third aspect of the invention, a method of detecting one or more properties of a target object at a wind turbine site is provided. The method comprises (a) providing a leaky feeder arrangement comprising a plurality of parallel leaky feeders, (b) supplying individual first radar signals to a group of leaky feeders in the leaky feeder arrangement, the individual first radar signals being configured to form a first radar signal beam in a predetermined direction relative to the leaky feeder arrangement, (c) receiving a second radar signal from the leaky feeder arrangement, wherein the second radar signal is reflected from the target object when the first radar signal beam hits the target object, and (d) analysing a first signal corresponding to the first radar signals and a second signal corresponding to the second radar signal in order to determine the one or more properties of the moving object.

This aspect is essentially based on the same idea as the first aspect discussed above.

Brief Description of the Drawings

The aspects defined above and further aspects of the present invention are apparent from the examples of embodiment to be described hereinafter and are explained with reference to the examples of embodiment. The invention will be described in more detail hereinafter with reference to examples of embodiment but to which the invention is not limited.

Figure 1 shows a schematic section of a wind turbine utilizing embodiments of the present invention.

Figure 2 shows a group of parallel leaky feeders of an apparatus according to an exemplary embodiment of the present invention.

Figure 3 shows the group of parallel leaky feeders depicted in Figure 2 when mounted on a wind turbine tower.

Figure 4 illustrates the principle of beam forming with the group of leaky feeders shown in Figure 2 and Figure 3 in accordance with an exemplary embodiment of the present invention.

Detailed Description

The illustrations in the drawings are schematic. It is noted that in different figures, similar or identical elements are provided with the same reference numerals or with reference numerals which differ only within the first digit.

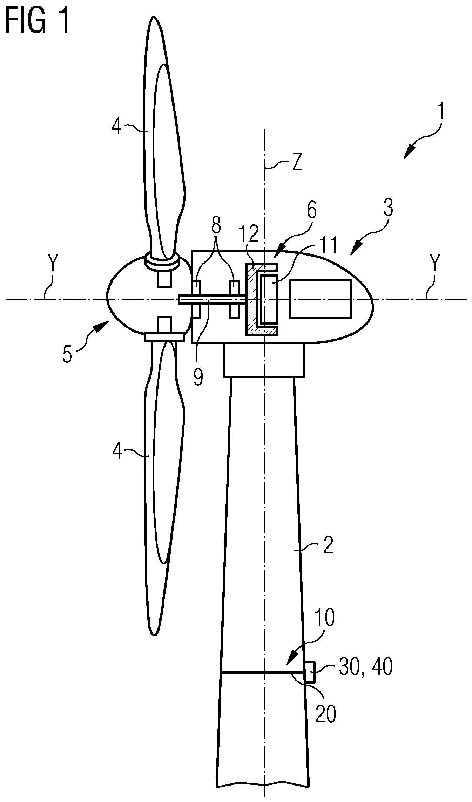

**Figure 1** shows a partial cross-sectional view of a wind turbine 1 utilizing an apparatus 10 for detecting properties of rotor blade 4 of the wind turbine in accordance with the invention.

More specifically, the wind turbine 1 comprises a tower 2, which is mounted on a non-depicted fundament. A nacelle 3 is arranged on top of the tower 2. In between the tower 2 and the nacelle 3, a yaw angle adjustment device (not shown) is provided, which is capable of rotating the nacelle around a vertical yaw axis Z. The wind turbine 1 further comprises a wind rotor 5 having one or more rotor blades 4 (in the perspective of Figure 1 only two blades 4 are visible). The wind rotor 5 is rotatable around a rotational axis Y. In general, when not differently specified, the terms axial, radial and circumferential in the following are made with reference to the rotational axis Y. The rotor blades 4 extend radially with respect to the rotational axis Y. The wind turbine 1 comprises an electric generator 6 having a stator 11 and a rotor 12. The rotor 12 is rotatable with respect to the stator 11 about the rotational axis Y to generate electrical power. The electric generator 6 and the generation of electrical power through the present invention is not a specific object of the present invention and will therefore not be described in further detail.

Figure 1 further shows an apparatus 10 according to the present invention. The apparatus 10 comprises a leaky feeder arrangement 20 mounted at the tower 2, and a transmitter 30 and a receiver 40 coupled to the leaky feeder arrangement 20. The transmitter 30 is configured to supply first radar signals to the leaky feeder arrangement 20 while the receiver 40 is configured to receive a second radar signal from the leaky feeder arrangement 20, e.g. a radar signal reflected from the rotor blade 4 when the first radar signals hit the rotor blade 4. The apparatus further comprises a processing unit (not shown) configured to analyse a first signal corresponding to the first radar signals and a second signal corresponding to the second radar signal in order to determine one or more properties of the target object, e.g. in this case the rotor blade 4.

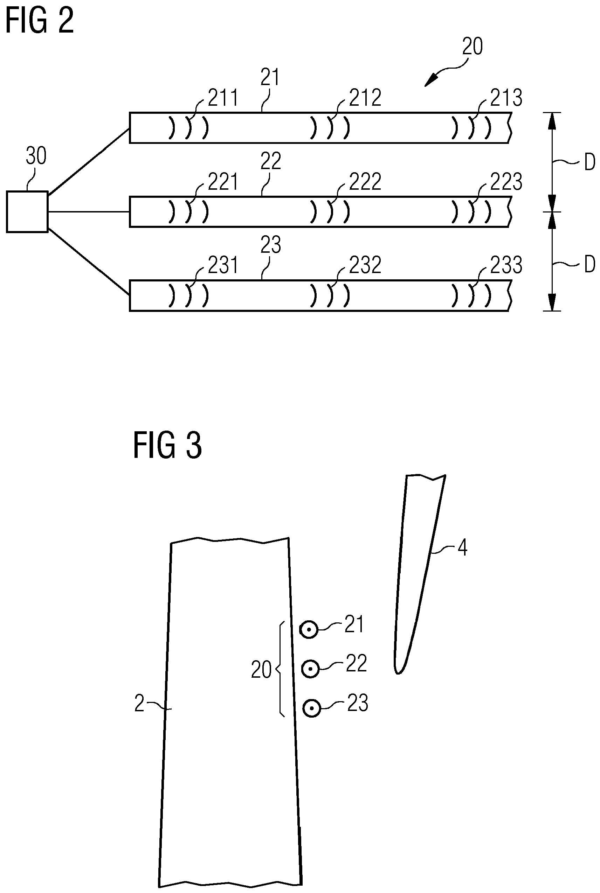

**Figure 2** shows an example of the leaky feeder arrangement 20 in more detail. As shown, the leaky feeder arrangement comprises a group of parallel leaky feeders 21, 22, 23. The first leaky feeder 21 comprises leaky sections 211, 212, 213, the second leaky feeder 22 comprises leaky sections 221, 222, 223, and the third leaky feeder 23 comprises leaky sections 231, 232, 233. The leaky sections 211, 221, 231 are positioned above each other in the drawing, i.e. in such a way that a line perpendicular to the longitudinal or axial direction of the leaky feeders 21, 22, 23 and extending through any of the leaky sections 211, 221, 231 will also extend through the other two leaky sections. Leaky sections 212, 222, 232 are positioned above each other in the same sense, as are leaky sections 213, 223, 233. The distance between each pair of neighbouring leaky feeders, i.e. between leaky feeders 21 and 22 and between leaky feeders 22 and 23, is equal to D. All three leaky feeders 21, 22, 23 are coupled to transmitter 30 which is configured to supply an individual first radar signal to each leaky feeder 21, 22, 23. The leaky feeders 21, 22, 23 may in particular be leaky coaxial cables, leaky waveguides or leaky striplines.

**Figure 3** shows the group of parallel leaky feeders 21, 22, 23 depicted in Figure 2 as mounted on the wind turbine tower 2 in Figure 1. Each leaky feeder 21, 22, 23 forms an arc or a loop around at least a part of the tower circumference at a height where a tip section of rotor blade 4 passes by, such that the leaky feeders 21, 22, 23 can emit first radar signals away from the tower around at least a part of, preferably around the entire circumference of the tower 2 and thereby detect the rotor blade 4 for many or all possible yaw angles (corresponding to wind directions). Although Figure 3 only shows leaky feeders 21, 22, 23 at one side of the tower 2, it is preferable that the leaky feeders 21, 22, 23 surround the entire circumference of the tower, such that first radar signals can be emitted towards the rotor blade for any given yaw angle between 0° and 360°. In other words, the leaky feeders 21, 22, 23 will emit first radar signals around the entire circumference of the tower 2, such that the directional characteristic of the leaky feeder arrangement 20 has the shape of a torus or donut which is focussed in a specific elevation angle.

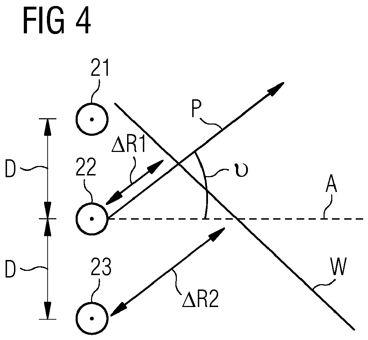

**Figure 4** illustrates the principle of beam forming with the group of leaky feeders 21, 22, 23 shown in Figure 2 and Figure 3 in accordance with an exemplary embodiment of the present invention. Here, the individual first radar signals supplied to neighbouring leaky feeders in the group of leaky feeders 21, 22, 23 are phase shifted by a certain amount $\Delta\varphi$. In other words, the phase of the first radar signal supplied to leaky feeder 21 is lagging the phase of the first radar signal supplied to leaky feeder 22 by the amount $\Delta\varphi$. Similarly, the phase of the first radar signal supplied to leaky feeder 22 is also lagging the phase of the first radar signal supplied to leaky feeder 23 by the amount $\Delta\varphi$. If more than three leaky feeders are used, this will continue such that the phase between any pair of neighbouring leaky feeder signals differ by the same amount $\Delta\varphi$. As shown in Figure 4, this causes a plane wave front W to propagate in the direction indicated by arrow P. The angle between the direction of propagation P and the direction A (which is perpendicular to the leaky feeder arrangement) is indicated as $\nu$. With knowledge of the distance D between the leaky feeders 21, 22, 23, a desired value of the angle $\nu$ can be obtained by choosing the value of the phase shift $\Delta\varphi$ as

$$\Delta\varphi = 2\pi \frac{D \sin \nu}{\lambda}$$

where $\lambda$ is the wavelength of the signal.

By varying the phase shift $\Delta\varphi$ rapidly, a surface (e.g. of a rotor blade or another target object) can be scanned.

The leaky feeder arrangement 20 also comprises at least one leaky feeder for receiving the reflected signal which is processed by a processing unit (not shown) together with the first signal in order to obtain the desired properties of the target object. The receiving leaky feeder may be a separate leaky feeder or one (or more) of the leaky feeders 21, 22, 23 used to transmit the phase shifted signals. Alternatively, a further group of leaky feeders may be provided to receive the reflected signal. In this case, the receiver 40 may further be configured to apply individual phase shifts to the received signals in order to also form a receiving beam.

As shown in Figure 3, each leaky feeder 21, 22, 23 comprises a plurality of slots that allow the corresponding first radar signal to leak out of the leaky feeder along its entire length and towards the target object, e. g. rotor blade 4. The slots may, according to possible embodiments, be regularly distributed along the length of the leaky feeder 21, 22, 23. According to other possible embodiments of the present invention, the leaky feeders 21, 22, 23 are a normal coaxial cable with low optical coverage of the outside conductor (mesh or slots/apertures), which also leaks electromagnetic waves.

The leaky feeders 20 may be provided with a heating system (not shown) in case severe over icing conditions are possible. Heating may be provided by air flowing between inside and outside conductors or by electrical current which runs in inner or outer conductors of the leaky feeders 20.

The first radar signal may, according to possible embodiments, be an electromagnetic radar signal or an ultrasonic radar signal. In case of an electromagnetic radar signal, the leaky feeders 20 are preferably configured as leaky coaxial cables. According to other embodiments, particularly where the first radar signal 100 is an electromagnetic signal of higher frequency, the leaky feeders 20 are preferably configured as leaky waveguides.

In general, according to different embodiments of the present invention, the first radar signal may be of any frequency, provided that it can be transmitted to the target object and be reflected by the same.

When the first radar signal beam W impinges on or hits the rotor blade 4, a reflected second radar signal is transmitted towards the leaky feeder arrangement 20. The plurality of slots of one or more of the leaky feeders in the arrangement 20 allow the second radar signal to leak into the corresponding leaky feeder(s) and propagate towards the receiver 40.

The processing unit (not shown) may e.g. determine the position and/or the speed of rotor blade 4 by analysing a first signal corresponding to the first radar signals (i.e. the transmitted radar signal beam W) and a second signal corresponding to the second radar signal (i.e. the reflected radar signal). The processing unit generates the first signal and transmits it to the transmitter 30 (e.g. via an optical link). The processing unit receives the second signal from the receiver 40 (e.g. via an optical link). Thereby, a closed loop is formed that allows precise determination of the position and/or speed of rotor blade 4.

The processing unit analyses the first signal (corresponding to first radar signal beam) and the second signal (corresponding to the second radar signal) for determining the position, speed, direction and size of the target object. According to known (radar) principles with regard to amplitude, phase, Doppler effect and ToF (Time of Flight), the processing unit is able to compare the first signal and the second signal caused by a moving object and consequently to determine the speed and/or position and/or direction and/or size of such object. The position of such object may be an angle with respect to a rotational axis or the three-dimensional position with respect to a system of Cartesian axes.

According to other embodiments of the present invention, the target object is the nacelle 2 for the detection of the position of the nacelle about the vertical yaw axis Z.

According to other embodiments of the present invention, other target objects may be detected in an area comprising a wind turbine 1, for example animals or intruders or changing waves (in offshore applications). In such embodiments, the leaky feeder arrangement 20 and associated electronics (transmitter 30, receiver 40, and processing unit) may not be located on the wind turbine tower 2, but instead on another structural element, possibly external to the wind turbine 1, such as a support structure or transition element.

It should be noted that the term "comprising" does not exclude other elements or steps and "a" or "an" does not exclude a plurality. Also elements described in association with different embodiments may be combined. It should also be noted that reference signs in the claims should not be construed as limiting the scope of the claims.

## Claims

1. Apparatus (10) for detecting one or more properties of a target object at a wind turbine site, the apparatus comprising
a leaky feeder arrangement (20) comprising a plurality of parallel leaky feeders,
a transmitter (30) coupled to the leaky feeder arrangement (20) and configured to supply individual first radar signals to a group of leaky feeders (21, 22, 23) in the leaky feeder arrangement (20), the individual first radar signals being configured to form a first radar signal beam (W) in a predetermined direction (P) relative to the leaky feeder arrangement (20),
a receiver (40) coupled to the leaky feeder arrangement (20) and configured to receive a second radar signal from the leaky feeder arrangement (20), wherein the second radar signal is reflected from the target object when the first radar signal beam (W) hits the target object, and
a processing unit configured to analyse a first signal corresponding to the first radar signals and a second signal corresponding to the second radar signal in order to determine the one or more properties of the moving object.

2. The apparatus according to the preceding claim, wherein the transmitter (30) is configured to generate the individual first radar signals by applying individual phase shifts to the first signal or by applying an amplitude modulation to the first signal.

3. The apparatus according to any of the preceding claims, wherein the leaky feeders (21, 22, 23) in the group of leaky feeders are arranged with a predetermined distance (D) between neighbouring leaky feeders.

4. The apparatus according to any of the preceding claims, wherein each leaky feeder in the leaky feeder arrangement comprises a plurality of leaky sections (211, 212, 213, 221, 222, 223, 231, 232, 233) at corresponding positions in the longitudinal direction of the leaky feeders.

5. The apparatus according to any of the preceding claims, wherein the leaky feeder arrangement (20) comprises at least one leaky feeder which is not part of the group of leaky feeders and configured to receive the second radar signal.

6. The apparatus according to any of the preceding claims, wherein the leaky feeder arrangement (20) comprises a further group of leaky feeders which are not part of the group of leaky feeders and configured to receive the second radar signal.

7. The apparatus according to the preceding claim, wherein the receiver (40) is configured to apply individual phase shifts to the second radar signal received by the leaky feeders in the further group of leaky feeders, thereby forming a second radar signal beam in a further predetermined direction relative to the leaky feeder arrangement (20).

8. The apparatus according to any of claims 1 to 4, wherein at least one leaky feeder in the group of leaky feeders is configured to receive the second radar signal.

9. The apparatus according to any of the preceding claims, wherein each leaky feeder in the leaky feeder arrangement is a leaky coaxial cable or a leaky waveguide.

10. The apparatus according to any of the preceding claims, wherein the leaky feeder arrangement is configured to form an arc or loop.

11. The apparatus according to any of the preceding claims, wherein the target object is a moving object of a wind turbine (1) or a moving object external to a wind turbine (1).

12. The apparatus according to the preceding claim, wherein the moving object is a wind turbine rotor blade (4), and wherein the one or more properties comprise one or more of a rotor blade position, a rotor blade speed, a rotor blade distance from tower, a rotor blade size, a rotor blade soiling state, and structural changes inside the rotor blade.

13. The apparatus according to any of the preceding claims, wherein the transmitter (30) is configured to vary the predetermined direction (P) during operation in order to scan a predetermined region.

14. A wind turbine (1) comprising an apparatus according to any of the preceding claims, wherein the leaky feeder arrangement (20) is arranged at a tower (2) or a nacelle (3) of the wind turbine (1).

15. A method of detecting one or more properties of a target object at a wind turbine site, the method comprising:

    providing a leaky feeder arrangement (20) comprising a plurality of parallel leaky feeders, supplying individual first radar signals to a group of leaky feeders (21, 22, 23) in the leaky feeder arrangement (20), the individual first radar signals being configured to form a first radar signal beam (W) in a predetermined direction (P) relative to the leaky feeder arrangement (20), receiving a second radar signal from the leaky feeder arrangement (20), wherein the second radar signal is reflected from the target object when the first radar signal beam (W) hits the target object, and analysing a first signal corresponding to the first radar signals and a second signal corresponding to the second radar signal in order to determine the one or more properties of the moving object.

# FIG 1

FIG 2

20

21

211     212     213

30

D

22

221     222     223

D

23

231     232     233

FIG 3

4

21

20

22

2

23

FIG 4

Europäisches
Patentamt

European
Patent Office

Office européen
des brevets

# EUROPEAN SEARCH REPORT

Application Number

EP 19 16 6617

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | WO 2014/000744 A2 (VESTAS WIND SYS AS [DK]) 3 January 2014 (2014-01-03) * page 2, line 24 - line 26 * * page 3, line 10 - line 22 * * page 5, line 24 - line 25 * * page 18, line 6 - line 36 * * figure 10 * ----- | 1-15 | INV. G01S7/03 G01S13/42 G01S7/41 G01S13/88 G01S13/89 H01Q1/12 H01Q21/00 F03D17/00 |
| A | EP 1 486 798 A2 (OCAS AS [NO]) 15 December 2004 (2004-12-15) * figures 11,12,13 * ----- | 13 | |
| A | WO 2017/193201 A1 (FIBER SENSYS INC [US]) 16 November 2017 (2017-11-16) * abstract * ----- | 9 | |

TECHNICAL FIELDS
SEARCHED      (IPC)

G01S
H01Q
F03D

The present search report has been drawn up for all claims

| Place of search | Date of completion of the search | Examiner |
|---|---|---|
| Munich | 19 June 2019 | Rodríguez González |

EPO FORM 1503 03.82 (P04C01)

## EP 3 719 528 A1

## ANNEX TO THE EUROPEAN SEARCH REPORT
## ON EUROPEAN PATENT APPLICATION NO.

EP 19 16 6617

This annex lists the patent family members relating to the patent documents cited in the above-mentioned European search report.
The members are as contained in the European Patent Office EDP file on
The European Patent Office is in no way liable for these particulars which are merely given for the purpose of information.

19-06-2019

| Patent document cited in search report | | Publication date | Patent family member(s) | | Publication date |
|---|---|---|---|---|---|
| WO 2014000744 | A2 | 03-01-2014 | EP | 2864632 A2 | 29-04-2015 |
| | | | EP | 3048300 A1 | 27-07-2016 |
| | | | ES | 2573288 T3 | 07-06-2016 |
| | | | US | 2015159632 A1 | 11-06-2015 |
| | | | US | 2016215763 A1 | 28-07-2016 |
| | | | WO | 2014000744 A2 | 03-01-2014 |
| EP 1486798 | A2 | 15-12-2004 | DK | 1486798 T3 | 24-11-2014 |
| | | | DK | 2546921 T3 | 04-08-2014 |
| | | | EP | 1486798 A2 | 15-12-2004 |
| | | | EP | 2530486 A2 | 05-12-2012 |
| | | | EP | 2546921 A2 | 16-01-2013 |
| | | | ES | 2490340 T3 | 03-09-2014 |
| | | | ES | 2523646 T3 | 28-11-2014 |
| | | | NO | 333526 B1 | 01-07-2013 |
| | | | US | RE41153 E | 02-03-2010 |
| | | | US | RE42708 E | 20-09-2011 |
| | | | US | 2004252046 A1 | 16-12-2004 |
| WO 2017193201 | A1 | 16-11-2017 | CA | 3024112 A1 | 16-11-2017 |
| | | | EP | 3455834 A1 | 20-03-2019 |
| | | | US | 2019164400 A1 | 30-05-2019 |
| | | | WO | 2017193201 A1 | 16-11-2017 |

EPO FORM P0459

For more details about this annex : see Official Journal of the European Patent Office, No. 12/82

## REFERENCES CITED IN THE DESCRIPTION

**Patent documents cited in the description**

- EP 2864632 A